# EUROPEAN PATENT SPECIFICATION

(11) **EP 0 842 341 B1**
(45) Date of publication and mention of the grant of the patent: **16.01.2002**
(21) Application number: 96926864.8
(22) Date of filing: 01.08.1996
(51) Int. Cl.: B65D 90/00, B60P 3/08, E04H 6/06

(54) **COLLAPSIBLE FRAME DEVICE**
ZUSAMMENFALTBARER RAHMEN
DISPOSITIF A CHASSIS REPLIABLE

(30) Priority: 02.08.1995 ZA 9506441
(43) Date of publication of application: 20.05.1998
(73) Proprietor: KAR-TAINER INTERNATIONAL INC., Miami, FL 33122 (US)
(72) Inventor: COX, Richard, Dawson, Miami, FL 33173 (US); PIENAAR, Salmon, Port Elizabeth, 6001 (ZA)
(74) Representative: Pratt, David Martin
(86) International application number: US9612645
(87) International publication number: WO9705349

(56) References cited:
- US-A- 4 124 119
- US-A- 4 917 557
- US-A- 5 213 458
- US-A- 5 253 975
- US-A- 5 427 485
- US-A- 5 454 672
- US-A- 5 547 333

## Description

This invention relates to a collapsible frame device suitable for packing vehicles in a transport container. The invention also relates to a method of packing vehicles in a transport container.

When packing motor vehicles in transport containers such as shipping containers, at least some of the vehicles are usually provided in an inclined position relative to the container floor to allow the maximum amount of vehicles to be fitted into the container.

In order to pack two motor vehicles into a standard six metre shipping container, the one vehicle is usually provided in an inclined position in the container with one end thereof located near the floor of the container and the other end provided near the roof of the container. The second vehicle is usually provided in a substantially horizontal position, parallel to the container floor, partly underneath the first vehicle. The same method may also be used to pack for example, four vehicles into a standard twelve metre shipping container.

The frame devices used to pack vehicles in a transport container are usually bulky and take up a lot of space when they have to be transported back after use. One such device is described in US-A-5213458.

It is accordingly an object of the present invention to provide a frame device suitable for packing vehicles in a transport container which frame device is collapsible allowing it to take up relative little space when transported back after use. The arrangement is preferably such that the frame device can be erected and collapsed with relatively little effort.

According to the present invention there is provided a collapsible frame device suitable for packing vehicles in a transport container having at least a floor and a wall structure, the frame device comprising a base which in use rests on the container floor; a first vehicle support means associated with the base for supporting a first vehicle in an inclined raised position relative to the base, the first vehicle support means comprising a lower vehicle support member and an upper vehicle support member, the support members in use in the erected configuration of the device being horizontally and vertically spaced from each other in order that the lower vehicle support member is relatively close to the base and that the upper vehicle support member is relatively high from the base; the lower and upper vehicle support members being collapsible onto the base to be located substantially flat onto the base in the collapsed configuration of the device; the arrangement being such that in the erected configuration of the device the device provides a space to receive a second vehicle at least partly beneath the first vehicle support means.

In this specification the term "vehicle" may in addition to its normal meaning also include a vehicle in semi knock-down form or a partly assembled vehicle.

The first vehicle support means may also include a ramp means releasably connectable to the upper and lower vehicle support members to support the first vehicle thereon in an inclined raised position in the erected configuration of the device. This vehicle will normally comprise a wheeled vehicle.

Alternatively, mounting brackets may be provided to mount a vehicle in semi-knock down form or in a partly assembled form to the lower and upper vehicle support members.

The base may comprise a generally rectangularly shaped configuration defining two opposing long sides and two opposing short ends. The base may be in the form of a frame.

The base may be provided with a number of wheels or rollers or the like whereupon the base in use slides.

The lower and upper vehicle support members may each comprise a cross-bar which in use extends transversely across the base from one side to the other side; and two substantially upright members which in the erected configuration of the device extend upright from the base on opposite sides thereof in use to engage the cross-bar towards opposite ends thereof thereby in use supporting the cross-bar in an elevated position from the base.

Each cross-bar may be releasably secured to the upright members. Preferably each cross-bar includes two projections which project transversely therefrom and which projections are telescopically associated with the upright members to connect them to each other.

An upright member from the lower support member and an upright member from the upper support member located on one side of the base may be connected to each other via a connecting member extending transversely between the said upright members preferably along the base of the device. The upright members may in the erected configuration of the device be connected to the base via the upright connecting member.

In an alternative embodiment of the invention an upright member from the lower support member and an upright member from the upper support member located on one side of the base may be separate from each other. The distance between them may be adjustable.

The upper and lower vehicle support members may be collapsible onto the base by folding them onto the base.

In a preferred embodiment of the invention the two substantially upright members of each support member are folded towards each other onto the base. Preferably, the two substantially upright members of each support member are folded towards each other folding along lines extending along or parallel to the opposing long sides of the base where the base comprises a generally rectangular configuration defining two opposing long sides and two opposing short ends.

The upright members of the support members may be hingedly attached to the base.

The ramp means may comprise a pair of ramp members each ramp member comprising an elongate member which in the erected configuration of the device is releasably attachable to the upper and lower vehicle support members.

The ramp means may be adapted in use to allow a vehicle to be driven thereon in the erected configuration of the device.

The frame device may also include a second vehicle support means for supporting a second vehicle on the base in the space provided at least partly below the ramp means in the erected configuration of the device.

The second vehicle support means may comprise a pair of tracks secured or securable to the base.

The second vehicle support means in use preferably supports the second vehicle in position generally parallel to the base.

According to another aspect of the present invention there is provided a collapsible frame device suitable for packing vehicles in a transport container having at least a floor and a wall structure, the frame device comprising an elongate base defining two opposing long sides, which base in use rests on the container floor; a first vehicle support means associated with the base for supporting a first vehicle in an inclined raised position relative to the base, the first vehicle support means comprising a lower vehicle support member and an upper vehicle support member, the support members in use in the erected configuration of the device being horizontally and vertically spaced from each other in order that the lower vehicle support member is relatively close to the base and that the upper vehicle support member is relatively high from the base; the lower and upper vehicle support members being collapsible onto the base in the collapsed configuration of the device by folding them onto the base along two lines each line extending along or parallel to a long side of the base; the arrangement being such that in the erected configuration of the device the device provides a space to receive a second vehicle at least partly beneath the first vehicle support means.

The first vehicle support means may also include a ramp means connected or connectable to the upper and lower vehicle support members to support the first vehicle thereon in an inclined raised position in the erected configuration of the device.

The invention also relates to the use of a frame device as described hereinabove for packing vehicles in a transport container.

According to another aspect of the present invention there is provided a method of packing vehicles in a transport container comprising the steps of:
- providing a frame device as described hereinabove in an erected configuration at least partly outside a transport container;
- providing two vehicles on the frame device, one vehicle on the first vehicle support means and the other on the base at least partly beneath the first vehicle support means; and
- moving the frame device with the vehicles thereon into the container.

The one vehicle may be driven onto the ramp means and preferably the other vehicle is also driven onto the frame device.

Without thereby limiting the scope of the invention and by means of example only, embodiments of the invention will now be described with reference to the accompanying drawings wherein:
- Figure 1: is an exploded perspective view of the frame device according to the invention;
- Figure 2: is a perspective view of the frame device of Figure 1 in its erected and assembled configuration;
- Figure 3: is a plan view of the device of Figure 1 in its collapsed configuration;
- Figure 4: is a diagrammatic side view of two vehicles loaded onto the device of Figure 2;
- Figure 5: is a diagrammatic side view of the arrangement of Figure 4 being loaded into a container;
- Figure 6: is a diagrammatic side view of the arrangement of Figure 4 loaded into a container;
- Figure 7: is an exploded perspective view of an alternative frame device according to the invention;
- Figure 8: is a perspective view of the frame device of Figure 7 in its erected and assembled configuration;
- Figure 9: is a perspective view of an upright member of the lower vehicle support member of the device of Figure 8;
- Figure 10: is a perspective view of part of one end of the base of the device of Figure 7; and
- Figure 11: is a perspective view of an attachment formation on the device of Figure 7.

In the accompanying drawings the same reference numerals are used to denote corresponding parts.

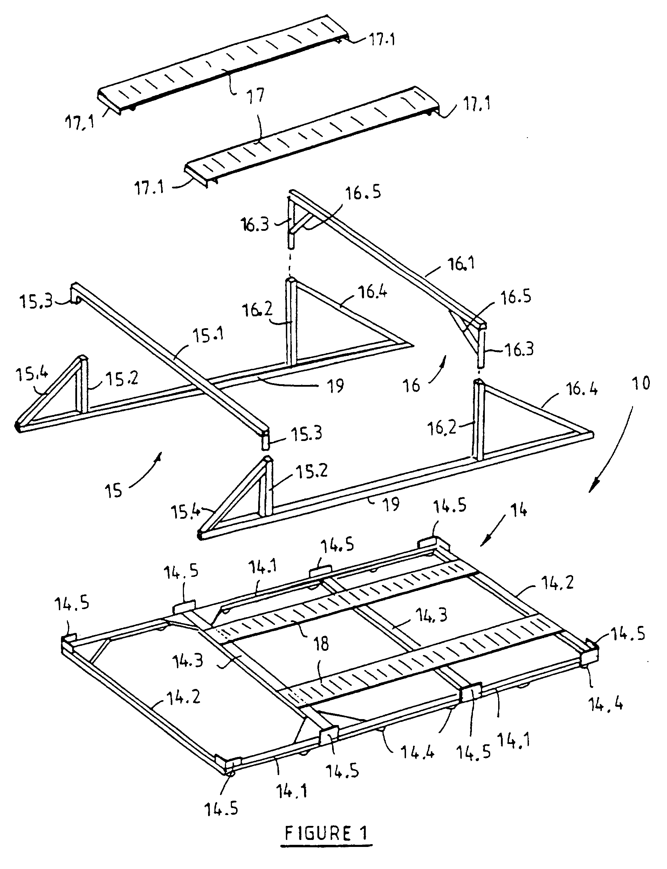

Referring now to Figures 1 to 6 there is provided a collapsible frame device 10 suitable for packing vehicles 11 and 12 into a transport container 13. The container 13 comprises a floor 13.1, a wall 13.2 a roof 13.3 and an opening 13.4 which is closeable by means of a door or the like [not shown].

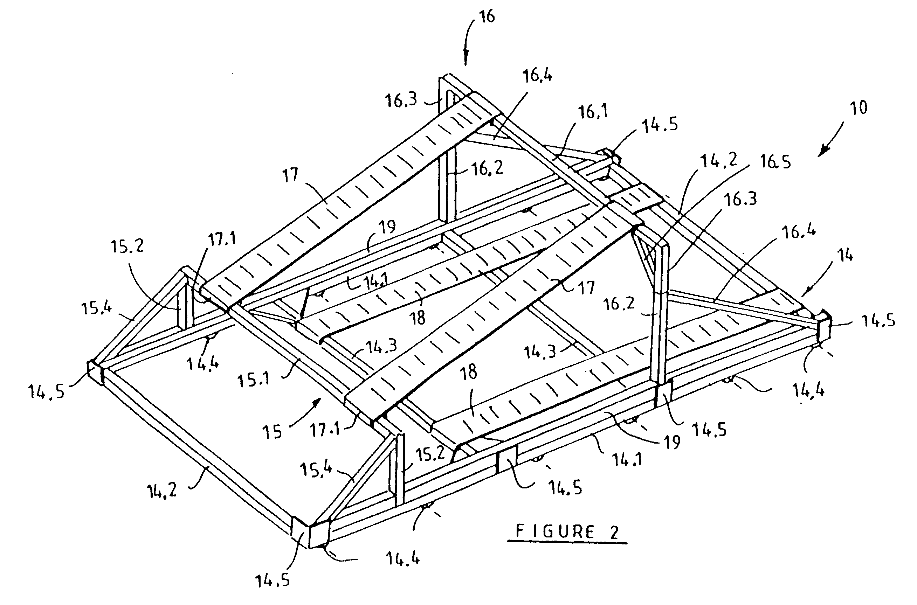

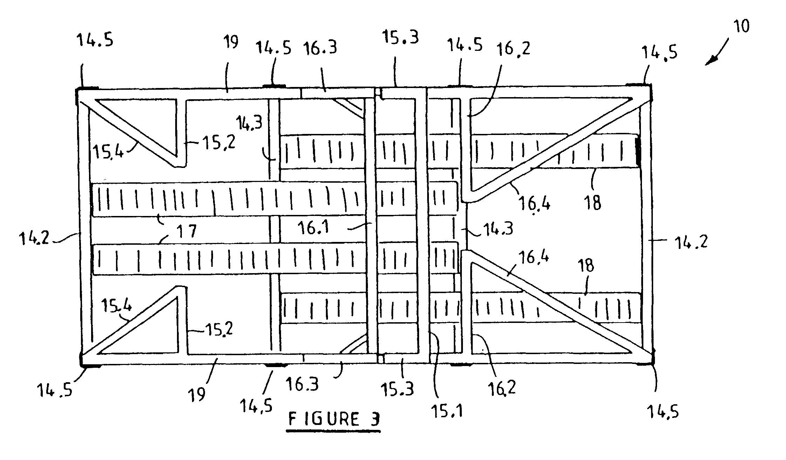

The frame device 10 comprises a base 14 which in use rests on the container floor 13.1. A first vehicle support means associated with the base 14 is provided for supporting a first vehicle 11 in an inclined raised position relative to the base 14 is also provided. The first vehicle support means comprises a lower vehicle support member 15 and an upper vehicle support member 16, the members in use in the erected configuration of the device 10 [Figure 2] being horizontally and vertically spaced from each other. The lower vehicle support member 15 is relatively close to the base 14 and the upper vehicle support member 16 is relatively high from the base 14 and in use they support a vehicle towards opposite ends of the vehicle to provide it in an inclined raised position. The support members 15 and 16 are also collapsible onto the base to be located substantially flat onto the base in the collapsed configuration of the device 10 [Figure 3]. A ramp means in the form of a pair of ramp members 17 are releasably connectable to the upper and lower vehicle support members 15 and 16 respectively to extend between them. A second vehicle support means 18 is also provided for supporting a second vehicle 12 in a horizontal position relative to the base 14 in a space provided by the device 10 partly beneath the ramp members 17 and the first vehicle 11.

The base 14 comprises a generally rectangularly shaped frame. The frame comprises two opposing long side members 14.1 and two opposing short end members 14.2 extending between the long side members 14.1.

Additional cross members 14.3 are provided to extend between the side members 14.1. The base 14 is adapted in use to fit into a standard six meter shipping container 13.

The base 14 is further provided with a number of wheels 14.4 whereupon the base 14 in use rides. Locating formations 14.5 are also provided on the base 14 to enhance positioning of the upper and lower support members 15 and 16 onto the base 14.

The lower support member 15 comprises a cross-bar 15.1 which in use extends across the base 14, from one side member 14.1 to the other, and two substantially upright members 15.2 extending upright from the base 14 on opposite sides thereof in the erected configuration of the device 10, that is upright from opposite side members 14.1 of the base 14. In the erected configuration of the device 10 the upright members 15.2 engage the cross-bar 15.1 on opposite ends thereof to support it in an elevated position relative to the base 14. The cross-bar 15.1 includes two projections 15.3 projecting transversely therefrom, which projections 15.3 are telescopically associated with the upright members 15.2 to connect them releasably to each other. Two braces 15.4 support the upright members 15.2.

The upper support member 16 also comprises a cross-bar 16.1, two upright members 16.2, two projections 16.3 and braces 16.4 and the arrangement is the same as described for the lower support member 15. In addition braces 16.5 are provided to provide strength to the cross-bar 16.1.

Each pair of upright members 15.2 and 16.2 located on one side of the base 14 are connected to each other via a connecting member 19 extending transversely between the said two upright members 15.2 and 16.2. In the erected configuration of the device the upright members 15.2 and 16.2 are connected to the base 14 via the connecting member 19.

The ramp members 17 are releasably secured to the vehicle support members 15 and 16. Channel members 17.1 provided at opposite sides of each ramp member 17, which channel members 17.1 in use hook over the cross-bars 15.1 and 16.1 respectively.

The second vehicle support means 18 comprises a pair of tracks secured to the base 14.

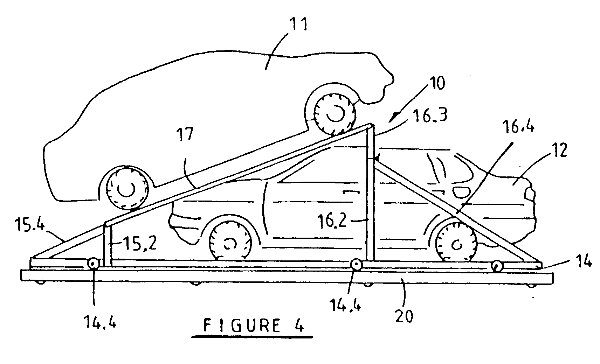

In use two fully built-up vehicles 11 and 12 may be provided on the device as shown in Figure 4 outside of the container. The first vehicle 11 may be driven onto the ramp members 17, by providing a pair of additional ramp members [not shown] to extend from the ends of the ramp members 17 supported on the cross-bar 15.1, to the ground level. After driving the vehicle 11 onto the ramp members 17 the additional ramp members may be removed. The second vehicle 12 may also be driven onto the tracks 18. Either the vehicle 11 or the vehicle 12 may be provided first onto the device 10.

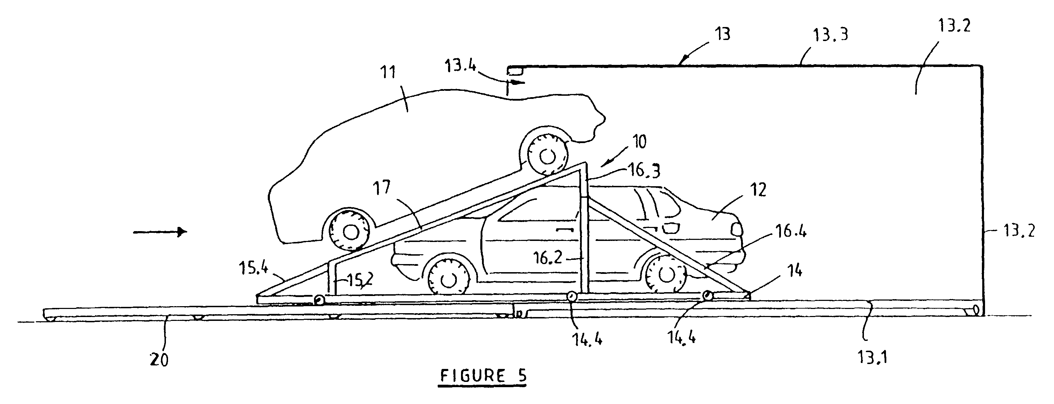

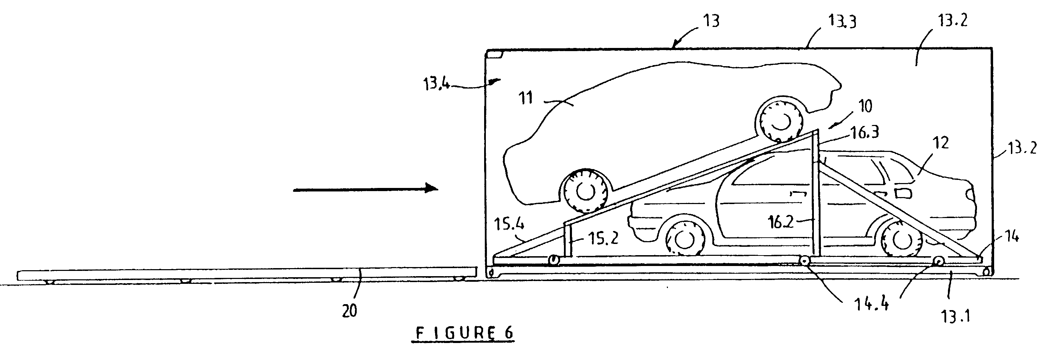

The device 10 may be provided on a trolley 20 (or alternatively a pallet) which is then pushed against a transport container 13 as shown in Figure 5. The device 10 with vehicles 11 and 12 are then pushed to slide on its wheels 14.4 into the container 13 as shown in Figure 6.

Alternatively the device 10 with vehicles 11 and 12 thereon may be provided directly on a support surface and the container floor 13.1 may be provided on the same level as the support surface. The ramp device 10 may then be slid into the container 13.

In stead of the fully built-up vehicles 11 and 12, semi-knock down vehicles [not shown] may be secured onto the device 10. In such a case the ramps 17 are removed and mounting means [not shown] is provided to mount the first vehicle body onto the cross-bars 15.1 and 16.1.

To collapse the device 10 the cross-bars 15.1 and 16.1 are removed from the upright members 15.2 and 16.2 respectively and placed onto the base 14 as shown in Figure 3. The upright members 15.2 and 16.2 are then folded onto the base towards each other as shown in Figure 3 by rotating them about the connecting members 19. In use a number of collapsed devices 10 may be stacked onto each other. In this way a number of collapsed devices 10 can be transported in a single container to reduce transport costs.

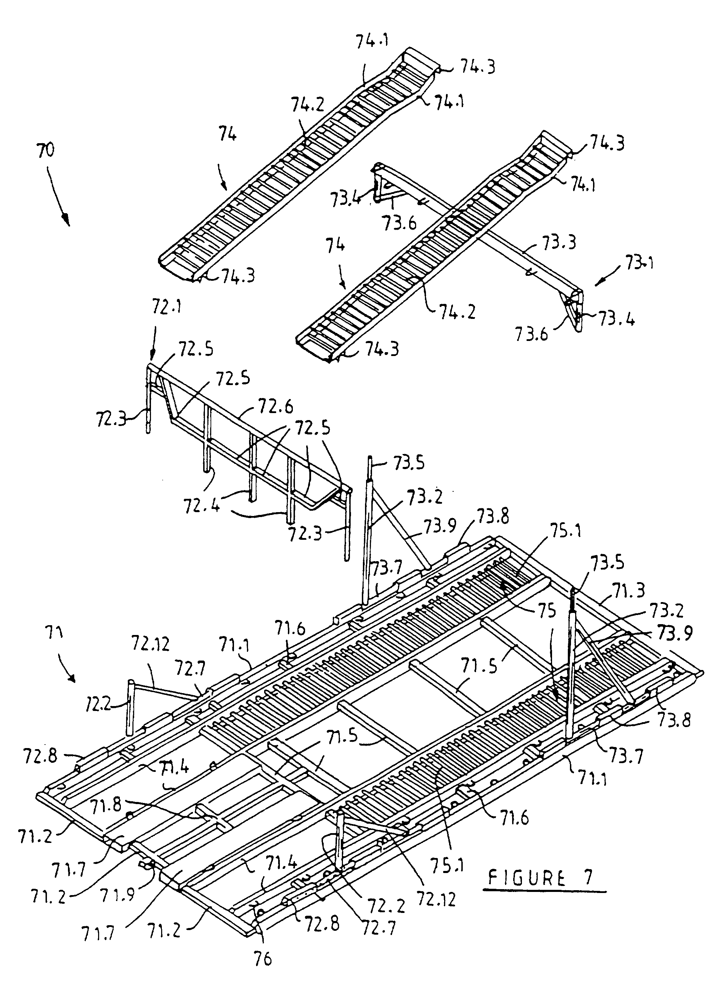

Referring now to Figures 7 to 11, an alternative collapsible frame device 70 is provided which operates basically the same as the device 10.

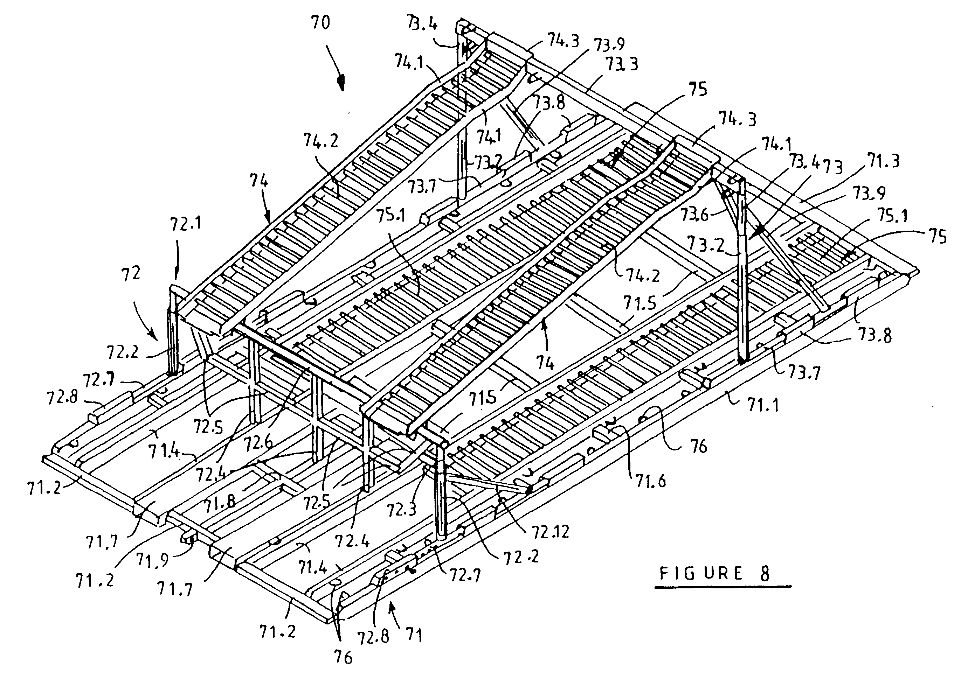

The frame device 70 comprises a base 71 and a first vehicle support means associated with the base 71 for supporting a first vehicle [not shown] in a inclined raised position relative to the base 71. The first vehicle support means comprises a lower vehicle support member 72 and an upper vehicle support member 73, the members in use in the erected configuration of the device 70 [Figure 8] being horizontally and vertically spaced from each other. The lower vehicle support member 72 is relatively close to the base 71 and the upper vehicle support member 73 is relatively high form the base 71. The support members 72 and 73 are also collapsible onto the base 71 to be located substantially flat onto the base 71 in the collapsed configuration of the device 70 [not shown]. A ramp means in the form of a pair of ramp members 74 are releasably connectable to the upper and lower vehicle support members 72 and 73 respectively. A second vehicle support means 75 in the form of a pair of tracks 75 is also provided for supporting a second vehicle [not shown] on the base 71 in a horizontal position relative thereto in a space provided by the device 70 partly beneath the ramp members 74 and the first vehicle [not shown] supported thereon.

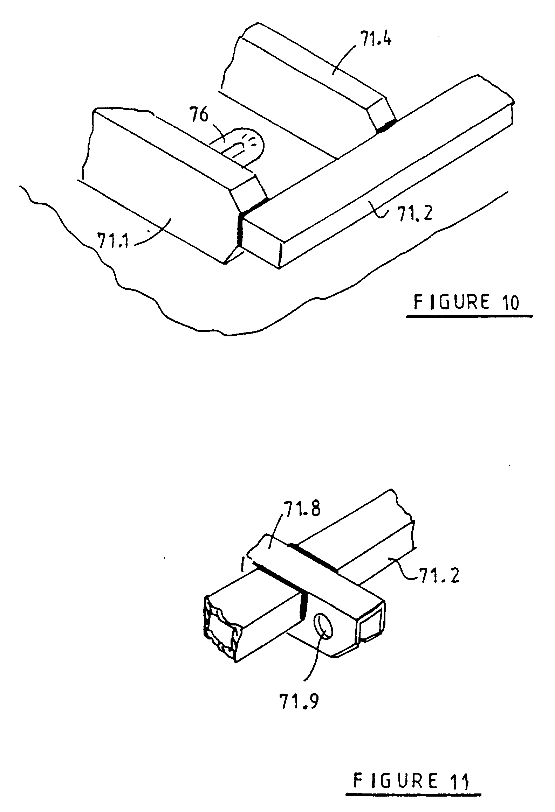

The base 71 comprises a generally rectangular shaped frame which is longitudinally receivable in a shipping container [not shown]. The base 71 comprises two opposing long side members 71.1 and two opposing short end members 71.2 and 71.3 respectively extending between the long side members 71.1. Additional elongate members 71.4 are provided whereto the tracks 75 are mounted. Additional short members 71.5 extend between the inner additional elongate member 71.4. Attachment members 71.6 extend between the outer additional elongate member 71.4 and the long side members 71.1. The members 71.2, 71.5 and 71.6 are provided slightly raised from a support surface whereupon the members 71.1 and 71.4 in use rests to reduce friction when the base 71 is in use slid on a support surface in a direction along the members 71.1 and 71.4. Figure 10 shows the attachment for the short end member 71.2 to the members 71.1 and 71.4 [In this embodiment of the invention the base 71 is not provided with wheels].

The base 71 also includes engagement formations 71.7 in the form of tubular members engageable by an apparatus such as a fork-lift to lift the unloaded device 70, for example, when stacking after use. A support 71.8 is provided between the engagement formations 71.7.

An attachment formation 71.9 [Figures 7 and 11] in the form of an eye formation is provided on the short end member 71.2. In use the eye formation 71.9 may be used to engage the device 70 when for example pulling it out of a shipping container. For example, a shackle or the like attached to a cable may be provided through the eye formation 71.9 and the cable may then be pulled to pull the device 70 out of the container.

The lower support member 72 comprises a cross-member 72.1 which in use extends across the base 71 from the one long side member 71.1 to the other. Two substantially upright members 72.2 extend upright from the base 71 on opposite sides thereof in the erected configuration of the device 70, that is upright from opposite side members 71.1 of the base 71. In the erected configuration of the device 70, the upright members 72.2 engage the cross-member 72.1 on opposite ends thereof to support it in an elevated position relative to the base 71.

The cross-member 72.1 includes a cross-bar 72.6 and two projections 72.3 projecting transversely therefrom, which projections 72.3 are telescopically associated with the upright members 72.2 to slide into them thereby to connect them releasably to each other. The cross-member 72.1 further includes three leg members 72.4 which in the erected configuration of the device 70 rests on the base 71 to provide stability to the lower support member 72. Additional stabilizing members 72.5 are also provided on the cross-members 72.1.

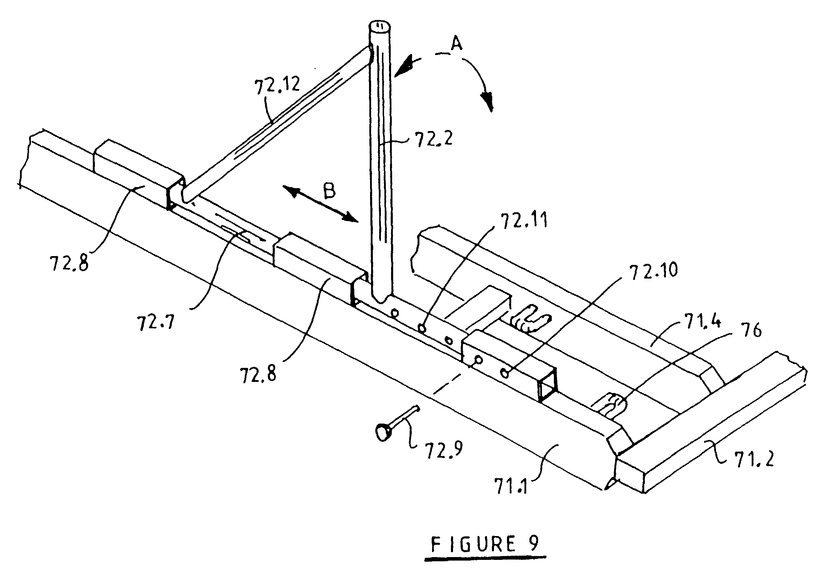

Each upright member 72.2 is mounted on a base member 72.7 [Figure 9]. The base member 72.7 extends through tubular members 72.8 thereby hingedly attaching the upright member 72.2 on the base 71 allowing the upright member 72.2 to be provided in an upright position as shown in Figure 9 or to fold down onto the base 71 by folding along a line extending longitudinally through the base member 72.7. The folding action is indicated by arrow A. The base member may also slide to and fro through the tubular members 72.8 as indicated by the arrow B to allow the distance between the lower support member 72 and the upper support member 73 to be adjusted. A locking means in the form of a locking pin 72.9 in use received through apertures 72.10 provided in a tubular members 72.8 and apertures 72.11 provided in the base member 72.7 is provided to arrest the base member 72.7 from sliding through the tubular members 72.8 in the direction of arrow B. Each upright member 72.2 is also provided with a brace 72.12 extending from the base member 72.7 to the upright member 72.2.

The upper support member 73 is similar in construction and operation as the tower support member 72 and also includes a cross-member 73.1 and two substantially upright members 73.2. The cross member 73.1 includes a cross-bar 73.3 and two projections 73.4 for in use receiving therein spigots 73.5 on the upright members 73.2 to releasably connect the cross-member 73.1 to the upright members 73.2. Braces 73.6 extend between each projection 73.4 and the cross-bar 73.3.

Each upright member 73.2 is also mounted on a base member 73.7 which is hingedly and slidingly attached to the base 71 via tubular members 73.8 in a similar manner as described for the lower support member 72. However, in this case no locking pin and holes are provided. Each upright member 73.2 also includes a brace 73.9.

Each ramp member 74 comprises two angle-iron members 74.1 with cross-bars 74.2 extending between them. Each ramp member 74 also includes channel members 74.3 on opposite sides thereof which in use hook over the cross-bars 72.6 and 73.3 respectively to releasably secure the ramp member 74 to the vehicle support members 72 and 73.

Each track 75 on the base 71 comprises of cross-bars 75.1 extending between the members 71.4.

Additional ramp members [not shown] may, in the erected configuration of the device 70, be attached to the lower ends of the ramp members 74 to allow a vehicle to be driven up onto the ramp members 74.

The device 70 may be used in a similar way as the device 10 to load vehicles into a transport container.

Eye formations 76 are provided on the device 70 for securing the vehicles [not shown] to the ramp device 70.

To collapse the device 70, the ramp members 74 are removed and thereafter the cross-members 72.1 and 73.1. The upright members 72.2 and 73.2 are then folded onto the base.

It will be appreciated that many variations in detail are possible without thereby departing from the scope and spirit of the invention.

## Claims

1. A collapsible frame device (10,70) suitable for packing vehicles (11,12) in a transport container (13) having at least a floor (13.1) and a wall structure (13.2), the frame device (10,70) comprising:
a base (14,71) which in use rests on the container floor (13.1);
a first vehicle support means associated with the base for supporting a first vehicle (11) in an inclined raised position relative to the base (14,71), the arrangement being such that, in the erected configuration of the device (10,70), the device (10,70) provides a space to receive a second vehicle (12) at least partly beneath the first vehicle support means, the first vehicle support means comprising:
a lower vehicle support member (15,72) and an upper vehicle support member (16,73), **characterized in that** each lower vehicle support member (15,72) and each upper vehicle support member (16,73) define substantially upright members and a cross-bar which, in use in the erected configuration of the device (10,70), are horizontally and vertically spaced from each other in order that the cross-bar of the lower vehicle support member (15,72) is relatively close to the base (14,71), and the cross-bar of the upper vehicle support member (16,73) is relatively high from the base (14,71); and
the lower (15,72) and upper vehicle support members (16,73) being collapsible onto the base to be located substantially flat onto the base in the collapsed configuration of the device;
and **in that** the first vehicle support means further includes ramp means which is releasably connectable to the upper and lower vehicle support members to allow the ramp means to be removed during collapsing of said support members, the ramp means in use supporting the first vehicle in an inclined raised position in the erected configuration of the device (10,70).

2. A device (10,70) as claimed in claim 1, wherein the ramp means comprises a pair of ramp members (17,74).

3. A device (10,70) as claimed in clam 1 or claim 2, wherein the base (14,71) comprises a frame defining two opposing long sides (14.1,71.1) and two opposing short ends (14.2,71.2).

4. A device as (10,70) as claimed in claim 3, wherein the cross-bars (15.1,72.6,16.1,73.3) of the lower and upper vehicle support members each extends, in use, transversely across the base from one side to the other side; and a respective pair of substantially upright members (15.2,72.2,16.2,73.2) which, in the erected configuration of the device, extend upright from the base on opposite sides thereof, to engage, in use, the associated cross-bar towards opposite ends thereof, thereby supporting the cross-bar, in use, in an elevated position from the base.

5. A device (10,70) as claimed in any one of claims 1 to 4, wherein the upper (16,73) and lower vehicle support members (15,72) are collapsible onto the base (14,71) by folding them onto the base.

6. A device (10,70) as claimed in claim 5, wherein each cross-bar (15.1,72.6,16.1,73.3) is releasably secured to the upright members (15.2,72.2,16.2,73.2).

7. A device (10,70) as claimed in claim 6, wherein each cross-bar (15.1,72.6,16.1,73.3) includes two projections (15.3,72.3,16.3,73.4) which project transversely therefrom, and which projections are telescopically associated with the upright members (15.2,72.2,16.2,73.2) to connect them to each other.

8. A device (10,70) as claimed in any one of claims 5 to 7, wherein the two substantially upright members of each support member are foldable towards each other onto the base to collapse them onto the base.

9. A device (10,70) as claimed in claim 8 when appendant to claim 3, wherein the two substantially upright members of each support member are foldable towards each other along lines extending along, or parallel to, the opposing long sides of the base (14.1,71.1).

10. A device (10,70) as claimed in claim 9, wherein the upright members (15.2,72.2,16.2,73.2) of the support members are hingedly attached to the base.

11. A device (10,70) as claimed in any one of claims 1 to 10, wherein the ramp means (17,74) is adapted in use to allow a vehicle to be driven thereon in the erected configuration of the device.

12. A device (10,70) as claimed in any one of claims 1 to 11, which includes a second vehicle support means for supporting a second vehicle (12) on the base in the space provided at least partly below the first vehicle support means in the erected configuration of the device (10,70).

13. A device (10,70) as claimed in claim 12, wherein the second vehicle support means comprises a pair of tracks (18,75) secured or securable to the base.

14. A device (10,70) as claimed in claim 12 or claim 13, wherein the second vehicle support means supports, in use, the second vehicle (12) in a position generally parallel to the base.

15. A collapsible frame device (10,70) suitable for packing vehicles (11,72) in a transport container (13) having at least a floor (13.1) and a wall structure (13.2), the frame device (10,70) comprising:
an elongate base (14,71) defining two opposing long sides (14.1,71.1) and two opposing short ends (14.2,71.2) which base (14,71) in use rests on the container floor (13.1);
a first vehicle support means associated with the base for supporting a first vehicle (11) in an inclined raised position relative to the base (14,71); the arrangement being such that, in the erected configuration of the device (10,70), the device (10,70) provides a space to receive a second vehicle (12) at least partly beneath the first vehicle support means,the first vehicle support means comprising:
a lower vehicle support member (15,72) and an upper vehicle support member (16,73), the support members, in use in the erected configuration of the device (10,70), being horizontally and vertically spaced from each other in order that the lower vehicle support member (15,72) is relatively close to the base, and that the upper vehicle support member (16,73) is relatively high from the base; **characterized in that**
the lower (15,72) and upper vehicle support members (16,73) are collapsible onto the base in the collapsed configuration of the device (10,70) by folding them onto the base about two axes, each axis extending along, or parallel to, a long side of the base (14.1,71.1).

16. A device (10,70) as claimed in claim 15, wherein the first vehicle support means also includes a ramp means (17,74) releasably connectable to the upper (16,73) and lower vehicle support members (15,72) to support the first vehicle thereon in an inclined raised position in the erected configuration of the device (10,70).

17. The use of a frame device (10,70) of any one of the preceding claims for packing vehicles in a transport container.

18. A method of packing vehicles (11,12) in a transport container (13), the method comprising the steps of:
providing a frame device (10,70) of any one of claims 1 to 16 in an erected configuration at least partly outside a transport container (13);
providing two vehicles (11,12) on the frame device (10,70), one vehicle (11) on the first vehicle support means and the other on the base at least partly beneath the first vehicle support means; and
moving the frame device (10,70) with the vehicles (11,12) thereon into the container (13).

19. A method as claimed in claim 18, wherein the one vehicle (11) is driven onto the ramp means (17,74).

20. A method as claimed in claim 19, wherein the other vehicle (12) is driven onto the base (14,71).

## Patentansprüche

1. Zusammenlegbare Rahmenanordnung (10, 70) zum Einstellen von Fahrzeugen (11, 12) in einen Transportcontainer (13) mit mindestens einem Boden (13.1) und einem Wandaufbau (13.2), wobei die Rahmenanordnung (10, 70) aufweist:
einen Boden (14, 71), der im Einsatz auf dem Containerboden (13.1) aufliegt;
eine erste Fahrzeugtrageeinrichtung, die dem Boden zugeordnet ist, um ein erstes Fahrzeug (11) in einer geneigten angehobenen Position relativ zum Boden (14, 71) aufzunehmen, wobei die Anordnung so getroffen ist, dass im aufgerichteten Zustand der Anordnung (10, 70) diese einen Raum zur Aufnahme eines zweiten Fahrzeugs (12) mindestens teilweise unter der ersten Fahrzeugtrageeinrichtung bietet, und wobei die erste Fahrzeugtrageeinrichtung umfasst:
ein unteres Fahrzeugtrageelement (15, 72) und ein oberes Fahrzeugtrageelement (16, 73), **dadurch gekennzeichnet, dass** jedes untere Fahrzeugtrageelement (15, 27) und jedes obere Fahrzeugtrageelement (16, 73) jeweils im wesentlichen aufrecht stehende Elemente sowie eine Traverse definieren, die im Einsatz im aufgerichteten Zustand der Anordnung (10, 70) waagerecht und senkrecht voneinander beabstandet sind, damit die Traverse des unteren Fahrzeugtrageelements (15, 72) verhältnismäßig nahe am Boden (14, 71) und die Traverse des oberen Fahrzeugtrageelements (16, 73) verhältnismäßig hoch über dem Boden (14, 71) liegen, und dass
das untere und das obere Fahrzeugtrageelement (15, 72 bzw. 16,73) auf den Boden umlegbar sind, um im umgelegten Zustand der Anordnung im wesentlichen flach auf dem Boden aufzuliegen;
und dass die erste Fahrzeugtrageeinrichtung weiterhin eine Rampeneinrichtung aufweist, die lösbar mit den oberen und unteren Fahrzeugtrageelementen verbindbar ist, damit die Rampeneinrichtung beim Zusammenlegen der Trageelemente entfernt werden kann, wobei die Rampeneinrichtung im Einsatz im aufgerichteten Zustand der Anordnung (10, 70) das erste Fahrzeug in einer geneigten angehobenen Position trägt.

2. Rahmenanordnung (10, 70) nach Anspruch 1, bei der die Rampeneinrichtung ein Paar Rampenelemente (17, 74) aufweist.

3. Rahmenanordnung (10, 70) nach Anspruch 1 oder 2, bei der der Boden (14, 71) einen Bodenrahmen aufweist, der zwei gegenüberliegende lange Seiten (14.1, 71.1) und zwei gegenüberliegende kurze Enden (14.2, 71.2) bildet.

4. Rahmenanordnung (10, 70) nach Anspruch 3, bei der die Traversen (15.1, 72.6, 16.1, 73.3) des unteren und des oberen Fahrzeugtrageelements im Einsatz jeweils quer über den Boden von einer zur anderen Seite desselben verlaufen und ein zugehöriges Paar im wesentlichen aufrechter Elemente (15.2, 72.2, 16.2, 73.2) im aufgerichteten Zustand der Anordnung von gegenüber liegenden Seiten des Bodens ab verlaufen, um im Einsatz an der zugeordneten Traverse zu den gegenüberliegenden Enden hin anzugreifen und so die Traverse im Einsatz in einer vom Boden abgehobenen Lage abzustützen.

5. Rahmenanordnung (10, 70) nach einem der Ansprüche 1 bis 4, bei der das obere und das untere Fahrzeugtrageelement (16, 73 bzw. 15, 72) durch Umfalten auf den Boden (14, 71) auf diesen zusammenlegbar sind.

6. Rahmenanordnung (10, 70) nach Anspruch 5, bei dem jede Traverse (15.1, 72.6, 16.1, 73.3) an den aufrechten Elementen (15,2, 72.2, 16.2, 73.2) lösbar befestigt ist.

7. Rahmenanordnung (10, 70) nach Anspruch 6, bei der jede Traverse (15.1, 72.6, 16.1, 73.3) zwei Ansätze (15.3, 72.3, 16.3, 73.4) aufweist, die quer von dieser abstehen und den aufrechten Elementen (15.2, 72.2, 16.2, 73.2) teleskopartig zugeordnet sind, um sie miteinander zu verbinden.

8. Rahmenanordnung (10, 70) nach einem der Ansprüche 5 bis 7, bei der die beiden im wesentlichen aufrechten Elemente jedes Trageelements zueinander hin auf den Boden faltbar sind, um sie auf den Boden zusammenzulegen.

9. Rahmenanordnung (10, 70) nach Anspruch 8 wenn rückbezogen auf Anspruch 3, bei der die beiden im wesentlichen aufrechten Elemente jedes Trageelements entlang Linien zueinander hin faltbar sind, die entlang den einander gegenüber liegenden langen Seiten des Bodens (14.1, 71.1) bzw. parallel zu diesen verlaufen.

10. Rahmenanordnung (10, 70) nach Anspruch 9, bei der die aufrechten Elemente (15.2, 72.2, 16.2, 73.2) der Trageelemente schwenkbar an den Boden angelenkt sind.

11. Rahmenanordnung (10, 70) nach einem der Ansprüche 1 bis 10, bei der im aufgerichteten Zustand der Anordnung im Einsatz ein Fahrzeug auf die Rampeneinrichtung (17, 74) fahrbar ist.

12. Rahmenanordnung (10, 70) nach einem der Ansprüche 1 bis 11, mit einer zweiten Fahrzeugtrageeinrichtung zur Aufnahme eines zweiten Fahrzeugs (12) auf dem Boden in dem Raum, der im aufgerichteten Zustand der Anordnung (10, 70) mindestens teilweise in dem Raum unter der ersten Fahrzeugtrageeinrichtung belassen ist.

13. Rahmenanordnung (10, 70) nach Anspruch 12, bei der die zweite Fahrzeugtrageeinrichtung ein Paar Schienen (18, 75) aufweist, die am Boden befestigt oder befestigbar sind.

14. Rahmenanordnung (10, 70) nach Anspruch 12 oder 13, bei der die zweite Fahrzeugtrageeinrichtung im Einsatz das zweite Fahrzeug (12) in einer Lage allgemein parallel zum Boden trägt.

15. Zusammenlegbare Rahmenanordnung (10, 70) zum Einstellen von Fahrzeugen (11, 72) in einen Transportcontainer (13), mit mindestens einem Boden (13.1) und einem Wandaufbau (13.2), wobei die Rahmenanordnung (10, 70) aufweist:
einen langgestreckten Boden (14, 71) mit zwei gegenüberliegenden langen Seiten (14.1, 71.1) und zwei gegenüberliegenden kurzen Enden (14.2, 71.2), der auf dem Containerboden (13.1) aufliegt;
eine dem Boden zugeordnete erste Fahrzeugtrageeinrichtung zur Aufnahme eines ersten Fahrzeugs (11) in einer geneigten angehobenen Position relativ zum Boden (14, 71), wobei die Anordnung derart getroffen ist, dass im aufgerichteten Zustand der Anordnung (10, 70) diese einen Raum zur Aufnahme eines zweiten Fahrzeugs (12) mindestens teilweise unter der ersten Fahrzeugtrageeinrichtung belässt, und wobei die erste Fahrzeugtrageeinrichtung umfasst:
ein unteres Fahrzeugtragelement (15, 72) und ein oberes Fahrzeugtrageelement (16, 73), wobei die Trageelemente im Einsatz im aufgerichteten Zustand der Anordnung (10, 70) horizontal und vertikal voneinander beabstandet sind, damit das untere Fahrzeugtrageelement (15, 72) verhältnismäßig nahe am Boden und das obere Fahrzeugtragelement (16, 72) verhältnismäßig weit über dem Boden liegen, **dadurch gekennzeichnet, dass** das untere und das obere Fahrzeugtrageelement (15, 72 bzw. 16, 73) im zusammengelegten Zustand der Anordnung (10, 70) durch Umfalten um zwei Achsen auf den Boden umlegbar sind, die beide entlang oder parallel zu einer langen Seite des Bodens (14.1, 71.1) verlaufen.

16. Anordnung (10, 70) nach Anspruch 15, bei der die erste Fahrzeugtrageeinrichtung auch eine Rampeneinrichtung (17, 74) aufweist, die lösbar mit den oberen und den unteren Fahrzeugtrageelementen (16, 73 bzw. 15, 72) verbindbar ist, um das erste Fahrzeug im aufgerichteten Zustand der Vorrichtung (10, 70) in einer geneigten angehobenen Position aufzunehmen.

17. Die Verwendung einer Rahmenvorrichtung (10, 70) nach einem der vorgehenden Ansprüche zum Einstellen von Fahrzeugen in einen Transportcontainer.

18. Verfahren zum Einstellen von Fahrzeugen (11, 12) in einen Transportcontainer (13) mit folgenden Schritten:
Vorhalten einer Rahmenanordnung (10, 70) nach einem der Ansprüche 1 bis 16 in einem aufgestellten Zustand mindestens teilweise außerhalb eines Transportcontainers (13),
Bereithalten von zwei Fahrzeugen (11, 12) auf der Rahmenanordnung (10, 70) derart, dass sich ein Fahrzeug (11) auf der ersten Fahrzeugtrageeinrichtung und das andere auf dem Boden mindestens teilweise unter der ersten Fahrzeugtrageeinrichtung befinden, und
Einbringen der Rahmenanordnung (10, 70) mit den auf ihr befindlichen Fahrzeugen (11, 12) in den Container (13).

19. Verfahren nach Anspruch 18, bei dem das eine Fahrzeug (11) auf die Rampeneinrichtung (17, 74) gefahren wird.

20. Verfahren nach Anspruch 19, bei dem das andere Fahrzeug (12) auf den Boden (14, 71) gefahren wird.

## Revendications

1. Dispositif de cadre rabattable (10, 70) adapté pour ranger des véhicules (11, 12) dans un conteneur de transport (13) comportant au moins un plancher (13.1) et une structure de paroi (13.2), le dispositif de cadre (10, 70) comprenant
une base (14, 71) qui, en utilisation, repose sur le plancher (13.1) du conteneur ;
des premiers moyens de support de véhicule associés à la base pour supporter un premier véhicule (11) dans une position élevée inclinée par rapport à la base (14, 71), l'agencement étant tel que, dans la configuration dressée du dispositif (10, 70), le dispositif (10, 70) fournit un espace pour recevoir un deuxième véhicule (12) au moins partiellement au-dessous des premiers moyens de support de véhicule, les premiers moyens de support de véhicule comprenant :
un élément de support de véhicule inférieur (15, 72) et un élément de support de véhicule supérieur (16, 73), **caractérisé en ce que** chaque élément de support de véhicule inférieur (15, 72) et chaque élément de support de véhicule supérieur (16, 73) définissent des éléments sensiblement verticaux et une traverse qui, en utilisation dans la configuration dressée du dispositif (10, 70), sont espacés horizontalement et verticalement l'un de l'autre afin que la traverse de l'élément de support de véhicule inférieur (15, 72) soit relativement proche de la base (14, 71) et que la traverse de l'élément de support de véhicule supérieur (16, 73) soit relativement éloignée en hauteur de la base (14, 71) ; et
les éléments de support de véhicule inférieur (15, 72) et supérieur (16, 73) sont rabattables sur la base de manière à être positionnés sensiblement à plat sur la base dans la configuration rabattue du dispositif ;
et **en ce que** les premiers moyens de support de véhicule comprennent, de plus, des moyens formant rampe qui peuvent être reliés de manière amovible aux éléments de support de véhicule supérieur et inférieur afin de permettre le retrait des moyens formant rampe lorsque lesdits éléments de support sont rabattus, les moyens formant rampe supportant, en utilisation, le premier véhicule dans une position élevée inclinée dans la configuration dressée du dispositif (10, 70).

2. Dispositif (10, 70) selon la revendication 1, dans lequel les moyens formant rampe comprennent deux éléments de rampe (17, 74).

3. Dispositif (10, 70) selon la revendication 1 ou la revendication 2, dans lequel la base (14, 71) comprend un cadre définissant deux côtés longs opposés (14.1, 71.1) et deux extrémités courtes opposées (14.2, 71.2).

4. Dispositif (10, 70) selon la revendication 3, dans lequel les traverses (15.1, 72.6, 16.1, 73.3) des éléments de support de véhicule inférieur et supérieur s'étendent chacune, en utilisation, transversalement à travers la base d'un côté à l'autre ; et une paire respective d'éléments sensiblement verticaux (15.2, 72.2, 16.2, 73.2) qui, dans la configuration dressée du dispositif, s'étendent verticalement à partir de la base sur les côtés opposés de celle-ci, afin de se mettre en prise, en utilisation, avec la traverse associée vers les extrémités opposées de celle-ci, supportant de ce fait la traverse, en utilisation, dans une position élevée par rapport à la base.

5. Dispositif (10, 70) selon l'une quelconque des revendications 1 à 4, dans lequel les éléments de support de véhicule supérieur (16, 73) et inférieur (15, 72) sont rabattables sur la base (14, 71) en les repliant sur la base.

6. Dispositif (10, 70) selon la revendication 5, dans lequel chaque traverse (15.1, 72.6, 16.1, 73.3) est fixée de manière amovible aux éléments verticaux (15.2, 72.2, 16.2, 73.2).

7. Dispositif (10, 70) selon la revendication 6, dans lequel chaque traverse (15.1, 72.6, 16.1, 73.3) comprend deux saillies (15.3, 72.3, 16.3, 73.4) qui s'étendent transversalement à partir de celle-ci, lesquelles saillies sont associées de manière télescopique aux éléments verticaux (15.2, 72.2, 16.2, 73.2) pour les relier les uns aux autres.

8. Dispositif (10, 70) selon l'une quelconque des revendications 5 à 7, dans lequel les deux éléments sensiblement verticaux de chaque élément de support sont repliables l'un vers l'autre sur la base afin de les rabattre sur la base.

9. Dispositif (10, 70) selon la revendication 8 lorsqu'elle est dépendante de la revendication 3, dans lequel les deux éléments sensiblement verticaux de chaque élément de support sont repliables l'un vers l'autre le long de lignes s'étendant le long des côtés longs opposés de la base (14.1, 71.1) ou parallèlement à ceux-ci.

10. Dispositif (10, 70) selon la revendication 9, dans lequel les éléments verticaux (15.2, 72.2, 16.2, 73.2) des éléments de support sont fixés de manière articulée à la base.

11. Dispositif (10, 70) selon l'une quelconque des revendications 1 à 10, dans lequel les moyens formant rampe (17, 74) sont adaptés pour permettre, en utilisation, l'entraînement d'un véhicule sur ceux-ci dans la configuration dressée du dispositif.

12. Dispositif (10, 70) selon l'une quelconque des revendications 1 à 11, qui comprend des deuxièmes moyens de support de véhicule pour supporter un deuxième véhicule (12) sur la base dans l'espace prévu au moins partiellement au-dessous des premiers moyens de support de véhicule dans la configuration dressée du dispositif (10, 70).

13. Dispositif (10, 70) selon la revendication 12, dans lequel les deuxièmes moyens de support de véhicule comprennent deux pistes (18, 75) fixées ou pouvant être fixées à la base.

14. Dispositif (10, 70) selon la revendication 12 ou la revendication 13, dans lequel les deuxièmes moyens de support de véhicule supportent, en utilisation, le deuxième véhicule (12) dans une position généralement parallèle à la base.

15. Dispositif de cadre rabattable (10, 70) adapté pour ranger des véhicules (11, 12) dans un conteneur de transport (13) comportant au moins un plancher (13.1) et une structure de paroi (18.2), le dispositif de cadre (10, 70) comprenant :
une base allongée (14, 71) définissant deux côtés longs opposés (14.1, 71.1) et deux extrémités courtes opposées (14.2, 71.2), laquelle base (14, 71) repose, en utilisation, sur le plancher (13.1) du conteneur ;
des premiers moyens de support de véhicule associés à la base pour supporter un premier véhicule (11) dans une position élevée inclinée par rapport à la base (14, 71), l'agencement étant tel que, dans la configuration dressée du dispositif (10, 70), le dispositif (10, 70) fournit un espace pour recevoir un deuxième véhicule (12) au moins partiellement au-dessous des premiers moyens de support de véhicule, les premiers moyens de support de véhicule comprenant :
un élément de support de véhicule inférieur (15, 72) et un élément de support de véhicule supérieur (16, 73), les éléments de support, en utilisation dans la configuration dressée du dispositif (10, 70), étant espacés horizontalement et verticalement l'un de l'autre afin que l'élément de support de véhicule inférieur (15, 72) soit relativement proche de la base et que l'élément de support de véhicule supérieur (16, 73) soit relativement éloigné en hauteur de la base ; **caractérisé en ce que** :
les éléments de support de véhicule inférieur (15, 72) et supérieur (16, 73) sont rabattables sur la base dans la configuration rabattue du dispositif (10, 70) en les repliant sur la base autour de deux axes, chaque axe s'étendant le long d'un côté long (14.1, 71.1) de la base ou parallèlement à celui-ci.

16. Dispositif (10, 70) selon la revendication 15, dans lequel les premiers moyens de support de véhicule comprennent également des moyens formant rampe (17, 74) susceptibles d'être reliés de manière amovible aux éléments de support de véhicule supérieur (16, 73) et inférieur (15, 72) afin de supporter le premier véhicule sur ceux-ci dans une position élevée inclinée dans la configuration dressée du dispositif (10, 70).

17. Utilisation d'un dispositif de cadre (10, 70) selon l'une quelconque des revendications précédentes pour ranger des véhicules dans un conteneur de transport.

18. Procédé de rangement de véhicules (11, 12) dans un conteneur de véhicule (13), le procédé comprenant les étapes consistant à :
prévoir un dispositif de cadre (10, 70) selon l'une quelconque des revendications 1 à 16 dans une configuration dressée au moins partiellement à l'extérieur d'un conteneur de transport (13) ;
prévoir deux véhicules (11, 12) sur le dispositif de cadre (10, 70), un véhicule (11) sur les premiers moyens de support de véhicule et l'autre sur la base au moins partiellement au-dessous des premiers moyens de support de véhicule ; et
déplacer le dispositif de cadre (10, 70) sur lequel les véhicules (11, 12) se trouvent dans le conteneur (13).

19. Procédé selon la revendication 18, dans lequel le premier véhicule (11) est entraîné sur les moyens formant rampe (17, 74).

20. Procédé selon la revendication 19, dans lequel l'autre véhicule (12) est entraîné sur la base (14, 71).
